# EUROPÄISCHE PATENTSCHRIFT

(11) **EP 3 077 249 B1**
(45) Veröffentlichungstag und Bekanntmachung des Hinweises auf die Patenterteilung: **20.01.2021**
(21) Anmeldenummer: 14809331.3
(22) Anmeldetag: 02.12.2014
(51) Int. Cl.: B60N 2/90, B60N 2/12, B60N 2/20, B60N 2/235

(54) **VORSCHWENKMECHANISMUS FÜR EINEN FAHRZEUGSITZ UND FAHRZEUGSITZ**
FORWARD PIVOT MECHANISM FOR A VEHICLE SEAT, AND VEHICLE SEAT
MÉCANISME DE PIVOTEMENT EN AVANT POUR SIÈGE DE VÉHICULE AUTOMOBILE ET SIÈGE DE VÉHICULE AUTOMOBILE

(30) Priorität: 02.12.2013 DE 102013224689; 23.04.2014 DE 102014207606
(43) Veröffentlichungstag der Anmeldung: 12.10.2016
(73) Patentinhaber: Adient Luxembourg Holding S.à r.l., 1855 Luxembourg (LU)
(72) Erfinder: PLUTA, Wolfgang, 67699 Heiligenmoschel (DE); WOLF, Christian, 67811 Dielkirchen (DE); DILL, Thomas, 67699 Heiligenmoschel (DE); CHRISTOFFEL, Thomas, 66909 Herschweiler-Pettersheim (DE)
(74) Vertreter: Finger, Catrin
(86) Internationale Anmeldenummer: PCT/EP2014/076160
(87) Internationale Veröffentlichungsnummer: WO 2015/082426

(56) Entgegenhaltungen:
- EP-A1- 1 302 361
- WO-A2-2005/108152
- DE-A1-102004 015 450
- DE-A1-102011 012 562

## Beschreibung

Die Erfindung betrifft ein Vorschwenkmechanismus, insbesondere ein Easy-Entry-System, für einen Fahrzeugsitz und einen Fahrzeugsitz mit einem solchen Vorschwenkmechanismus, insbesondere mit einem Easy-Entry-System.

Im Stand der Technik sind verschiedene Easy-Entry-Systeme bekannt, die Bestandteil eines Fahrzeugsitzes sind, welche einen erleichterten Einstieg in eine zweite Sitzreihe eines Fahrzeuges ermöglichen. Das Easy-Entry-System ist durch einen Entriegelungshebel, welcher üblicherweise an einer Sitzlehnen-Oberkante des Fahrzeugsitzes angeordnet ist, betätigbar, wodurch die Sitzlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung verschiebbar sein. Des Weiteren weist der Fahrzeugsitz eine Komfortverstellung der Sitzlehne und eine Ladebodenfunktion auf. Diese beiden Funktionen sind mittels eines Komforthebels betätigbar.

Aus der DE 10 2004 015 450 A1 ist ein Kraftfahrzeugsitz mit einem Easy-Entry-System bekannt, bei dem ein lehnenfester Anschlagbolzen in ein Maul einer Klinke einläuft und so einen Anschlag für das Vorklappen der Rückenlehne bildet.

Die EP 1 302 361 A1, WO 2005/108152 A2 und DE 10 2011 012 562 A12 A1 offenbaren weitere Kraftfahrzeugsitze mit einem Easy-Entry-System.

Aufgabe der vorliegenden Erfindung ist es, einen gegenüber dem Stand der Technik verbesserten Vorschwenkmechanismus, insbesondere ein vereinfachtes Easy-Entry-System, für einen Fahrzeugsitz und einen Fahrzeugsitz mit einem solchen verbesserten Vorschwenkmechanismus, insbesondere einem Easy-Entry-System, anzugeben.

Die Aufgabe wird hinsichtlich des Vorschwenkmechanismus durch die Merkmale des Anspruchs 1 gelöst. Hinsichtlich des Fahrzeugsitzes wird die Erfindung durch die im Anspruch 9 angegebenen Merkmale gelöst.

Der erfindungsgemäße Vorschwenkmechanismus zur Positionierung einer Sitzlehne eines Fahrzeugsitzes in mindestens eine vordere Position, insbesondere in eine Easy-Entry-Position, und zur Positionierung der Sitzlehne über die vordere Position hinaus in zumindest eine weitere vordere Position, insbesondere eine Ladebodenposition, umfasst eine Komfortverriegelung zur Positionierung und Verriegelung der Sitzlehne in mindestens eine/r Sitzposition, und eine Easy-Entry-Klinke zum Positionieren der Sitzlehne in die mindestens eine vordere Position, wobei ein Schwenkbereich der Sitzlehne in die mindestens eine vordere Position mittels der Easy-Entry-Klinke begrenzbar ist, wobei die Easy-Entry-Klinke derart ausgebildet ist, dass diese beim Verstellen der Sitzlehne aus einer der Sitzpositionen hinaus in eine der vorderen Positionen einen Anschlag nach vorne bildet.

Zur Erzielung der Begrenzung des Schwenkbereichs der Sitzlehne ist die Easy-Entry-Klinke schaltbar und in eine Stellung bringbar, in welcher ein Sperrhaken oder eine Sperrklinke der Easy-Entry-Klinke in Eingriff mit einem Endanschlag kommt.

Eine mögliche Ausführungsform der Erfindung sieht vor, dass sitzlehnenseitig, korrespondierend zum Anschlag der Easy-Entry-Klinke, der Endanschlag vorgesehen ist, der mit dem Anschlag, insbesondere mit dem Sperrhaken oder der Sperrklinke, der Easy-Entry-Klinke in der vorderen Position der Sitzlehne selbsthemmend zusammenwirkt.

Gemäß einer Weiterbildung ist die Easy-Entry-Klinke schwenkbar und federbelastet an einem Beschlagunterteil angelenkt. Durch ein im Bereich der Drehachse der Easy-Entry-Klinke angeordnetes Federelement, insbesondere eine Biegefeder, beispielsweise eine Spiralfeder, ist nach Entriegelung der Sitzlehne aus einer der Sitzpositionen und beim Schwenken der Sitzlehne nach vorne die Easy-Entry-Klinke in eine Stellung bringbar, insbesondere schwenkbar, in welcher der Sperrhaken oder die Sperrklinke als Anschlag wirkt zur Begrenzung eines weiteren Schwenkens der Sitzlehne nach vorne.

Beim Wiederaufrichten der Sitzlehne aus der vorderen Position, insbesondere eine Easy-Entry-Position oder Ladebodenposition, hinaus in eine der Sitzpositionen im Komfortbereich hinein, steht der Endanschlag derart in Eingriff mit einer Softsperre, dass eine Softsperrkraft größer als eine Längs-/Schienenverstellkraft des Fahrzeugsitzes ist. Hierdurch ist sichergestellt, dass der Fahrzeugsitz zunächst mittels einer Längsverstellung in eine hintere oder hinterste Position gestellt, insbesondere gefahren werden kann, bevor die Sitzlehne in die Sitzposition im Komfortbereich geschwenkt wird.

In einer möglichen Ausführungsform ist die Softsperre als ein L-Profil ausgebildet, das zumindest eine Außenkontur mit zumindest einer Steuer- oder Schaltnocke, insbesondere in Form eines Vorsprungs, aufweist, welche mit dem Endanschlag zusammenwirkt. Gemäß einer Ausführungsform ist die Softsperre schwenkbar und federbelastet, insbesondere federnd vorgespannt, am Beschlagunterteil angelenkt.

Beim Gleiten des Endanschlags, insbesondere eines am Endanschlag angeordneten Rollelements, an der Außenkontur der Softsperre ist die Schaltnocke und eine Federkraft, insbesondere einer Softsperrfeder beispielsweise in Form einer Rückstellfeder, zu überwinden, wodurch die Softsperrkraft definiert oder bestimmt ist. Dabei kann die Schaltnocke derart unterschiedliche Anstiege aufweisen, dass die beim Schwenken der Sitzlehne nach vorne oder nach hinten wirkenden Softsperrkräfte verschieden sind. Alternativ können die Anstiege der Schaltnocke in Schwenkrichtung nach vorne und nach hinten gleich ausgebildet sein, so dass in beiden Schwenkrichtungen der Sitzlehne dieselbe Softsperrkraft überwunden werden muss. Die Softsperrfeder/Rückstellfeder ist insbesondere mit einem Ende an der Softsperre und mit dem anderen Ende am Beschlagunterteil angelenkt.

In einer alternativen Ausführungsform kann die Softsperre derart verlängert ausgebildet sein, dass in einer der vorderen Positionen der Sitzlehne diese durch ein selbsthemmendes Zusammenwirken von Endanschlag und Softsperre gehalten wird. Insbesondere weist die verlängerte Softsperre im Bereich der Verlängerung eine Sperrnocke, insbesondere einen sperrenden Vorsprung, in der Außenkontur auf. Alternativ kann die Sperrnocke an einer Innenkontur der Softsperre angeordnet sein.

Ein erfindungsgemäßer Fahrzeugsitz mit einer neigungseinstellbaren und frei schwenkbaren Sitzlehne und einem Längseinsteller weist den zuvor beschriebenen Vorschwenkmechanismus zur Neigungseinstellung und zum Freischwenken der Sitzlehne mittels einer schaltbaren Easy-Entry-Klinke und mit einer integrierten Softsperrfunktion mittels einer Softsperre auf. Dabei wirken der Längseinsteller und der Vorschwenkmechanismus derart zusammen, dass der Fahrzeugsitz bei einer vorgeschwenkten Sitzlehne in einer der vorderen Positionen vor einem Rückschwenken der Sitzlehne in eine Sitzposition erst nach hinten verfahrbar ist, indem die Softsperrkraft größer als eine Längsverstellkraft ist.

Die Aufgabe wird des Weiteren erfindungsgemäß mit einem Beschlag gelöst, der mit einem Vorschwenkmechanismus, insbesondere einem Easy-Entry-System und/oder einem Ladesystem, zur Positionierung einer Sitzlehne eines Fahrzeugsitzes in mindestens eine vordere Position, insbesondere in eine Easy-Entry-Position und/oder eine Ladeposition, mit einer Komfortverriegelung zur Positionierung der Sitzlehne in mindestens eine Sitzposition und einer erweiterten Komfortfunktion zur Positionierung der Sitzlehne über die vordere Position, insbesondere die Easy-Entry-Position und/oder eine Ladeposition, hinaus in eine Ladebodenposition zusammenwirkt, wobei ein Schwenkbereich der Sitzlehne in der vorderen Position, insbesondere in der Easy-Entry-Position und/oder Ladeposition, mittels einer in das zumindest eine Beschlagteil eingreifenden Easy-Entry-Klinke begrenzt ist, wobei die Easy-Entry-Klinke derart ausgebildet ist, dass diese beim Verstellen der Sitzlehne aus dem Komfortbereich hinaus in eine vordere Position, insbesondere in die Easy-Entry-Position und/oder die Ladeposition, derart geschwenkt wird, dass die Easy-Entry-Klinke in der Easy-Entry-Position einen Anschlag nach vorne bildet, wobei beim Aufrichten der Sitzlehne aus dieser vorderen Position, insbesondere aus der Easy-Entry-Position und/oder der Ladeposition hinaus, in eine der Sitzpositionen im Komfortbereich hinein die Easy-Entry-Klinke derart in Eingriff mit einer Softsperre steht, dass eine Softsperrkraft größer als eine Längsverstellkraft des Fahrzeugsitzes ist.

Die Erfindung ermöglicht, dass der Fahrzeugsitz aus einer vorderen Längsposition in eine hintere oder hinterste Längsposition fährt, bevor die Sitzlehne des Fahrzeugsitzes aus der vorderen Position, wie der Easy-Entry-Position oder der Ladeposition, in eine der Sitzpositionen im Komfortbereich gestellt oder geschwenkt wird. Dies erhöht die Sicherheit des Nutzers, da eine geeignete, insbesondere verriegelbare Fahr- oder Längsposition des Fahrzeugsitzes angefahren wird. Mittels der in der vorderen Position der Sitzlehne als Anschlag eingerichteten Easy-Entry-Klinke wird darüber hinaus sichergestellt, dass die Sitzlehne an einem Weiterschwenken nach vorne gehindert wird.

Anhand der beigefügten schematischen Figuren werden nachfolgend Ausführungsbeispiele der Erfindung näher beschrieben. Dabei zeigen:
- Fig. 1: schematisch einen Fahrzeugsitz mit einem erfindungsgemäßen Beschlag,
- Fig. 2 bis 12: schematisch in verschiedenen Zuständen einen erfindungsgemäßen Beschlag.

Einander entsprechende Teile sind in allen Figuren mit den gleichen Bezugszeichen versehen.

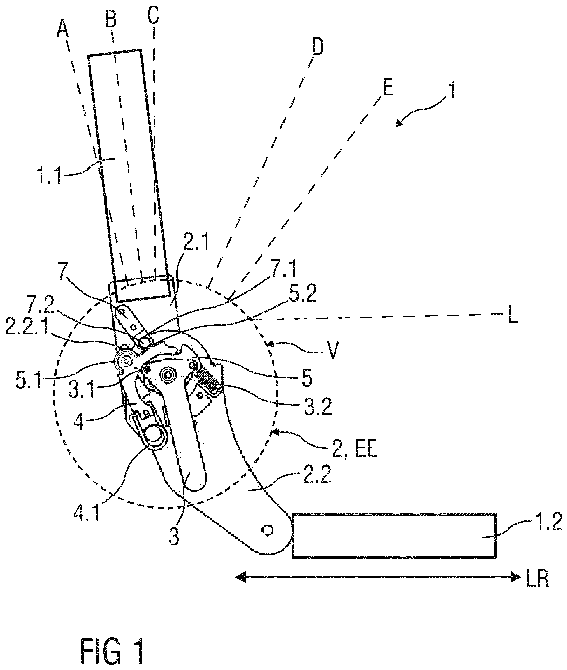

Die Figur 1 zeigt schematisch in Seitenansicht einen Teil eines Fahrzeugsitzes 1 mit einer Sitzlehne 1.1 und einem Sitzkissen 1.2 im Bereich eines Beschlags 2, wobei die Sitzlehne 1.1 mittels des Beschlags 2 drehbar am Sitzkissen 1.2 angeordnet ist.

Der Beschlag 2 weist einen Vorschwenkmechanismus V auf, der erfindungsgemäß dazu eingerichtet ist, mindestens eine Funktion aufzuweisen, nämlich die Funktion einer Einstiegshilfe (Easy-Entry-System). Entsprechend umfasst der Beschlag 2 als Einstiegshilfe eine Easy-Entry-Klinke 5. Soweit der Vorschwenkmechanismus als Ladehilfe dient weist der Beschlag 2 einen Sperrhebel auf. Die beiden Funktionen unterscheiden sich dabei lediglich in dem Neigungswinkel beim Vorschwenken der Sitzlehne 1.1. Die Easy-Entry-Klinke 5 oder der Sperrhebel sind korrespondierend mit inneren oder äußeren Führungs-, Sperr- und/oder Steuerkonturen zu den jeweils integrierten Funktionen ausgebildet.

Die Erfindung wird nachfolgend für einen insbesondere als ein Easy-Entry-System EE ausgebildeten Vorschwenkmechanismus V mit einer Easy-Entry-Position D als vordere Position beschrieben. Die Erfindung ist analog auf einen als Ladesystem ausgebildeten, nicht näher dargestellten Vorschwenkmechanismus V anwendbar, wobei anstelle der Easy-Entry-Klinke 5 ein entsprechend ausgebildeter und eingerichteter Sperrhebel vorgesehen ist.

Der Fahrzeugsitz 1 ist beispielsweise ein Vordersitz oder ein Fahrzeugsitz einer hinteren, beispielsweise einer zweiten Sitzreihe für ein Fahrzeug und ist auf einem Schienensystem angeordnet, wodurch der Fahrzeugsitz 1 in Längsrichtung LR des Fahrzeuges mittels eines nicht näher dargestellten Längsverstellers verschiebbar ist.

Um einen Einstieg in einen Fondbereich oder eine hintere Sitzreihe des Fahrzeuges zu vereinfachen, weist der Fahrzeugsitz 1 eine mittels eines Easy-Entry-Systems EE des Beschlags 2 realisierbare Easy-Entry-Funktion auf.

Bei der Easy-Entry-Funktion handelt es sich um eine Einstiegshilfe, die einen vergrößerten und somit bequemeren Zugang zu dem Fondbereich, insbesondere eines zweitürigen Fahrzeuges oder in eine hintere Sitzreihe eines mehrtürigen Fahrzeuges ermöglicht. Mittels des Easy-Entry-Systems EE wird der Fahrzeugsitz 1 auf dem Schienensystem in Längsrichtung LR, insbesondere in Fahrtrichtung nach vorne verschoben, um den Einstiegsbereich zu vergrößern, wobei gleichzeitig die Sitzlehne 1.1 des Fahrzeugsitzes 1 nach vorne in eine Easy-Entry-Position D geklappt wird. Dabei ist ein Schwenkbereich der Sitzlehne 1.1 bei ausgelöster Easy-Entry-Funktion, z. B. bis zu 35°, nach vorne begrenzt.

Darüber hinaus kann die Sitzlehne 1.1 in eine weitere Komfortposition, insbesondere in eine Ladeposition E und/oder einer Ladebodenposition L, mittels einer erweiterten Komfortfunktion geschwenkt werden.

Die Sitzlehne 1.1 ist um eine Schwenkachse schwenkbar, die in Richtung Querausdehnung des Fahrzeuges verläuft. Das Schwenken der Sitzlehne 1.1 ist durch Betätigen eines nicht näher dargestellten Betätigungshebels, welcher an einem mit einer Rückstellfeder 3.2 federbelasteten Entriegelungshebel 3 des Easy-Entry-Systems EE an einem Anlenkungspunkt 3.1 über einen nicht gezeigten Bowdenzug oder ein anderes geeignetes Zugelement angelenkt ist, auslösbar. Der Betätigungshebel ist nur an einer Seite des Fahrzeugsitzes 1 vorgesehen.

An jeder Seite des Fahrzeugsitzes 1 ist ein Beschlag 2 angeordnet, der aus einem Beschlagoberteil 2.1 und einem Beschlagunterteil 2.2 gebildet ist. Alternativ kann nur ein Beschlag 2 vorgesehen sein, wobei auf der gegenüberliegenden Seite des Fahrzeugsitzes 1 ein Drehlager für eine Übertragungsstange vorgesehen ist.

Das Beschlagoberteil 2.1 ist lehnenfest an der Sitzlehne 1.1 befestigt und das Beschlagunterteil 2.2 ist unterbaufest beispielsweise am Fahrzeugboden oder am Sitzkissen 1.2 befestigt angeordnet. Der Beschlag 2, insbesondere ein Dreh- und/oder Rastbeschlag, ist derart als eine Getriebeverbindung ausgebildet, dass eine Drehbewegung relativ zwischen dem Beschlagoberteil 2.1 und dem Beschlagunterteil 2.2 erfolgt.

Die an jeder Seite der Sitzlehne 1.1 angeordneten Beschläge 2 sind über ein nicht näher dargestelltes Übertragungselement in Form einer gekröpften Übertragungsstange oder eines Rohres miteinander gekoppelt, so dass eine Arretierung der Sitzlehne 1.1 beidseitig aufhebbar ist, um dieselbe schwenken zu können. Dabei ist jeweils ein Beschlag 2 an einem Ende des Übertragungselementes formschlüssig befestigt. Alternativ kann nur an einer Seite des Fahrzeugsitzes 1 ein Beschlag 2 angeordnet sein und auf der gegenüberliegenden Seite des Fahrzeugsitzes 1 ist ein Drehlager zur Aufnahme des Übertragungselementes vorgesehen.

Bei dem Übertragungselement handelt es sich insbesondere um eine Stange oder ein Rohr, welche bzw. welches die Beschlagkomponente mit einer gegebenenfalls weiteren vorhandenen Beschlagkomponente verbindet, wobei das Übertragungselement um seine Längsachse drehbar ist, wie aus der DE 10 2004 008 599 B3 bekannt ist.

Der Vorschwenkmechanismus V umfasst das Easy-Entry-System EE und die erweiterte Komfortfunktion für die Ladeposition E und/oder die Ladebodenposition L, welche in dem Beschlag 2 integriert und in Figur 1 näher dargestellt sind.

Das Easy-Entry-System EE umfasst eine am Beschlag 2 drehbar angeordnete und mit einer zugehörigen Rückstellfeder 4.1 federbelastete Softsperre 4 und den Entriegelungshebel 3, der ebenfalls drehbar am Beschlag 2 angeordnet ist, sowie die Easy-Entry-Klinke 5. Darüber hinaus umfasst das Easy-Entry-System EE lehnenseitig einen Endanschlag 7.

Im gezeigten Ausführungsbeispiel sind die Softsperre 4 und der Entriegelungshebel 3 um eine separate Dreh- und Schwenkachse und die Softsperre 4 und die Easy-Entry-Klinke 5 um eine gemeinsame Dreh- und Schwenkachse drehbar. Die Softsperre 4 ist in der Art eines Hebels oder eines L-Profils ausgebildet.

Durch Betätigen eines nicht näher dargestellten Easy-Entry-Betätigungshebels wird der Entriegelungshebel 3 zur Auslösung einer Verstellfunktion im Komfortbereich in den Sitzpositionen A bis C betätigt, wodurch die Sitzlehne 1.1 von einer Sitzposition A über Sitzpositionen B und C (auch Komfort-, Gebrauchs- oder Lehnenpositionen genannt) oder umgekehrt geschwenkt werden kann.

Die Einstellung und Positionierung der Sitzlehne 1.1 nach hinten und somit in die Sitzposition A ist dabei begrenzt durch den an einem Anschlag 2.2.1 des Beschlagunterteils 2.2 anschlagenden lehnenseitigen, insbesondere lehnenfesten, Endanschlag 7.

Der lehnenseitige und lehnenfeste Endanschlag 7 umfasst eine Aufnahme 7.1 für ein Rollelement 7.2. Im Komfortbereich und somit im Verstellbereich der Sitzlehne 1.1 zwischen den Sitzpositionen A bis C (hintere Komfortposition, mittlere Komfortposition, vordere Komfortposition) sind das Rollelement 7.2 des Endanschlags 7 und die Softsperre 4 voneinander entkoppelt und haben keinen Kontakt. Darüber hinaus sind die Schienen des Schienensystems des Fahrzeugsitzes 1 und der Beschlag 2 geschlossen.

Im Komfortsitzbereich der Sitzlehne 1.1 mit den Sitzpositionen A bis C, wobei die Sitzposition A die hinterste Komfortsitzstellung, die Sitzposition B die mittlere Komfortsitzstellung oder Ausgangs- oder Designsitzstellung und die Sitzposition C die vorderste Komfortsitzstellung repräsentieren, liegt die Easy-Entry-Klinke 5 mit einer als eine Außenkontur 5.2 ausgebildeten Anschlagkontur an dem Endanschlag 7 des Beschlagoberteils 2.1, insbesondere am Rollelement 7.2 an. Das Rollelement 7.2 des lehnenfesten Endanschlags 7 ist als eine von der Oberfläche des Beschlagoberteils 2.1 abragende Anschlagfläche, insbesondere als eine Anschlagrolle oder ein Anschlagstift/-pin, ausgeformt. Alternativ kann der Endanschlag 7 separat als ein Profilelement, insbesondere als ein L-Profil ausgebildet sein und am Beschlagoberteil 2.1 befestigt, insbesondere verschweißt sein.

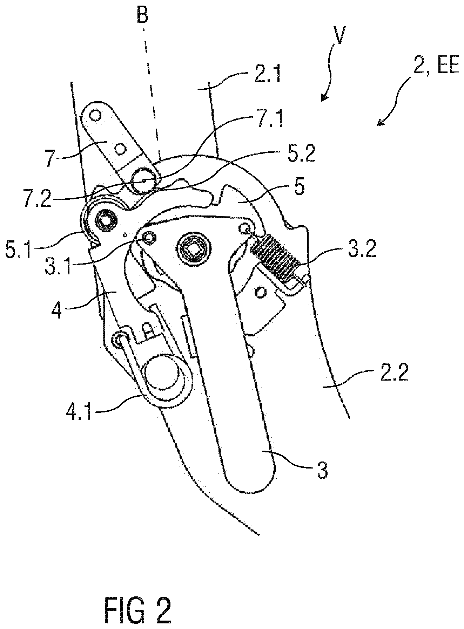

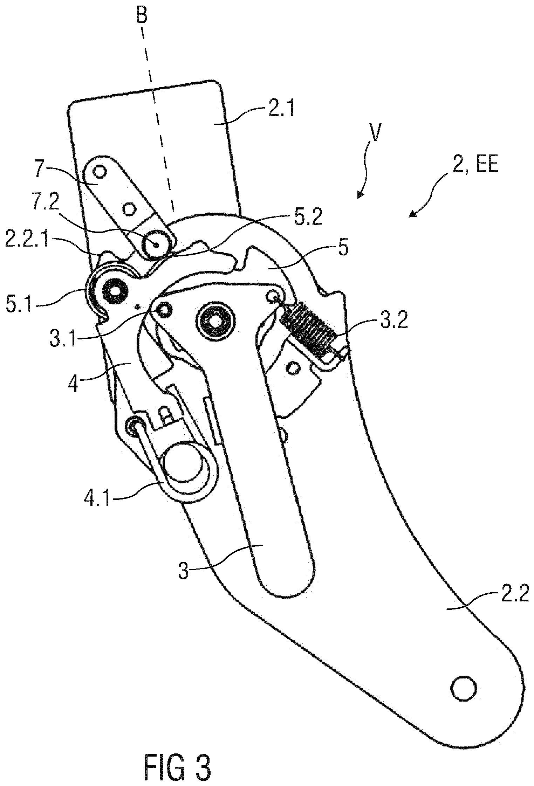

Figuren 2 und 3 zeigen die Sitzlehne 1.1 in der Sitzposition B einer mittleren Komfortposition oder Normalposition im Komfortbereich. In dieser Lehnen- oder Sitzposition B sind die Schiene und der Beschlag 2 geschlossen. Die Softsperre 4 und der Endanschlag 7 sind entkoppelt. Das Rollelement 7.2 liegt an der Außenkontur 5.2 der Easy-Entry-Klinke 5 an.

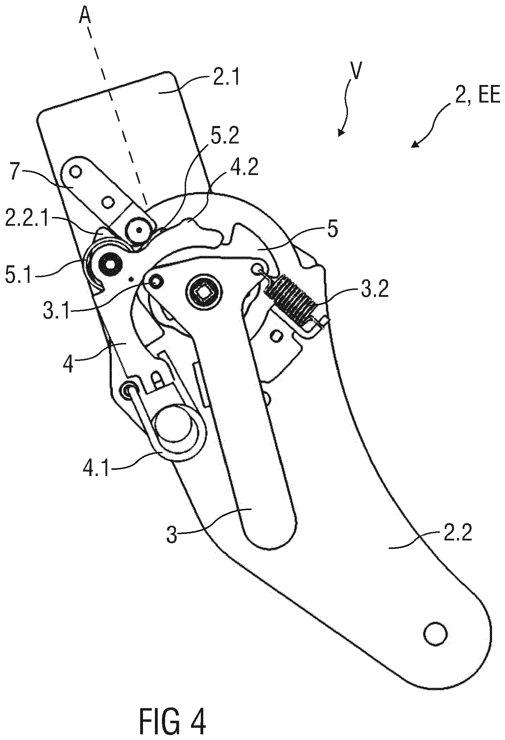

Figur 4 zeigt die Sitzlehne 1.1 in der hinteren Sitzposition A einer hinteren Komfortposition im Komfortbereich. In dieser Lehnen- oder Sitzposition A sind die Schiene und der Beschlag 2 geschlossen. Die Softsperre 4 und der Endanschlag 7 sind entkoppelt. Der Endanschlag 7 schlägt an einem boden- oder sitzteilseitigen/-festen Anschlag 2.2.1 des Beschlagunterteils 2.2 an und begrenzt damit die Einstellung der Sitzlehne 1.1 nach hinten.

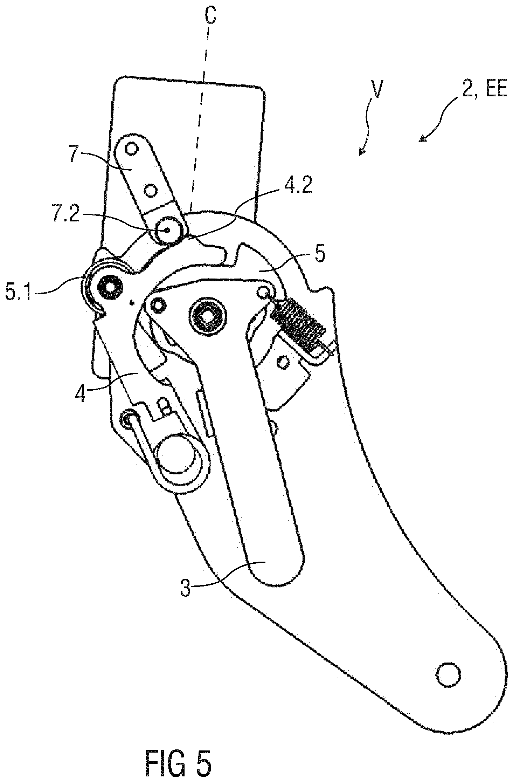

Figur 5 zeigt die Sitzlehne 1.1 in der vorderen Sitzposition C einer vorderen Komfortposition im Komfortbereich. In dieser Lehnen- oder Sitzposition C sind die Schiene und der Beschlag 2 geschlossen. Die Softsperre 4 und der Endanschlag 7 sind zumindest bereichsweise entkoppelt, insbesondere solange entkoppelt bis das vom Endanschlag 7 abstehende Rollelement 7.2 an eine Steuerkontur 4.2 (auch Schaltkontur genannt), insbesondere einen von der Außenkontur abstehenden Vorsprung, der Softsperre 4 anschlägt.

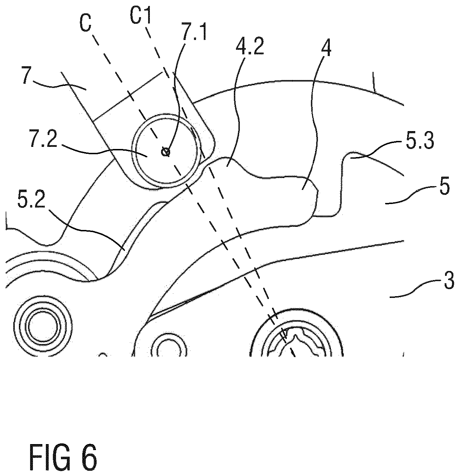

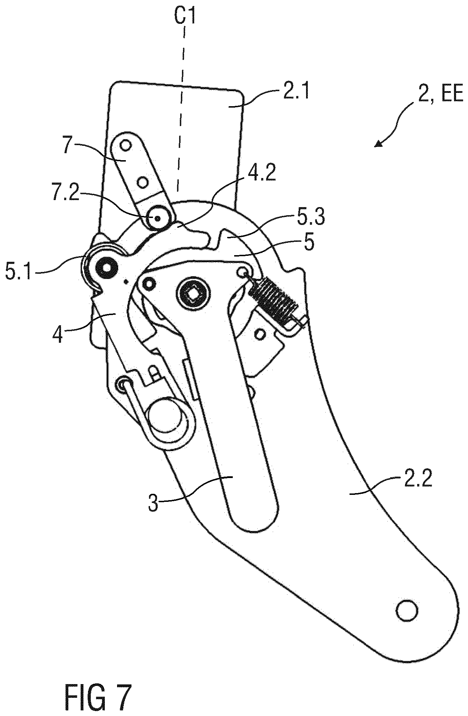

Figuren 6 und 7 zeigen die Positionen und die Bewegung des Endanschlags 7 relativ zur Softsperre 4 und der Steuerkontur 4.2 von der vorderen Sitzposition C bis zur Startposition C1 für eine Freischwenkbewegung der Sitzlehne 1.1 aus dem Komfortbereich hinaus in die Easy-Entry-Position D oder die Ladeposition E oder die Ladebodenposition L. Im Ausführungsbeispiel ist die Steuerkontur 4.2 als eine profilierte Außenkontur ausgebildet, an welcher das Rollelement 7.2 entlang geführt wird. Alternativ kann das Rollelement 7.2 in der Art eines Stiftes in einer Innenkontur der Softsperre 4 geführt sein.

Zur Stellung der Sitzlehne 1.1 in die Easy-Entry-Position D nach vorne, insbesondere ca. 35° nach vorne, muss die Federkraft der Rückstellfeder 4.1 (auch Softsperrfeder genannt) der vorgespannten Softsperre 4 (auch Softlocksperre genannt) überwunden werden. Dazu wird der Entriegelungshebel 3 betätigt und die Sitzlehne 1.1 aus dem Komfortbereich hinaus von der vorderen Sitzposition C nach vorne in Richtung Startposition C1 geschwenkt, wobei der Beschlag 2 geöffnet wird. Über einen Bowdenzug (nicht dargestellt) wird gleichzeitig die Schiene (nicht dargestellt) entriegelt, damit der Fahrzeugsitz 1 weiter nach vorne gefahren werden kann.

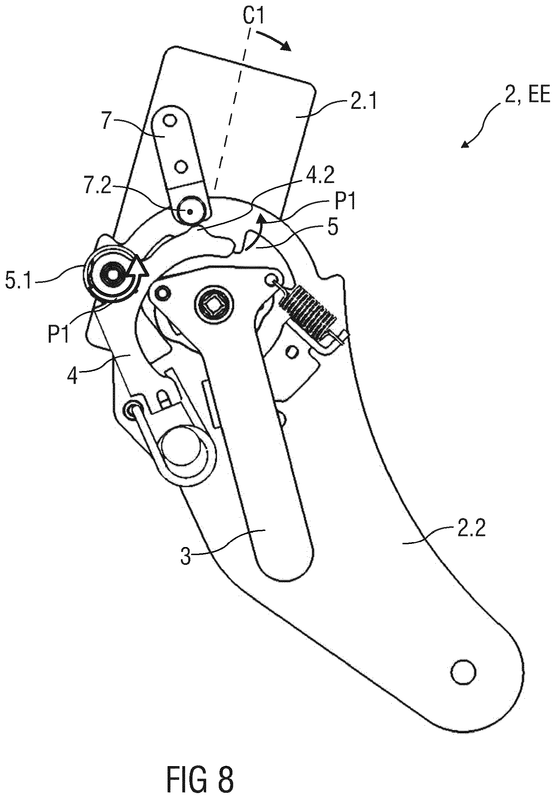

Erst beim Überfahren oder Hinausschwenken der Sitzlehne 1.1 aus der vordersten Komfortposition oder Sitzposition C in die Easy-Entry-Position D wird die Softlockfunktion der Softsperre 4 durch Kopplung, insbesondere Aneinandergreifen von Endanschlag 7 und Softsperre 4 betätigt, wie das in Figur 8 gezeigt ist.

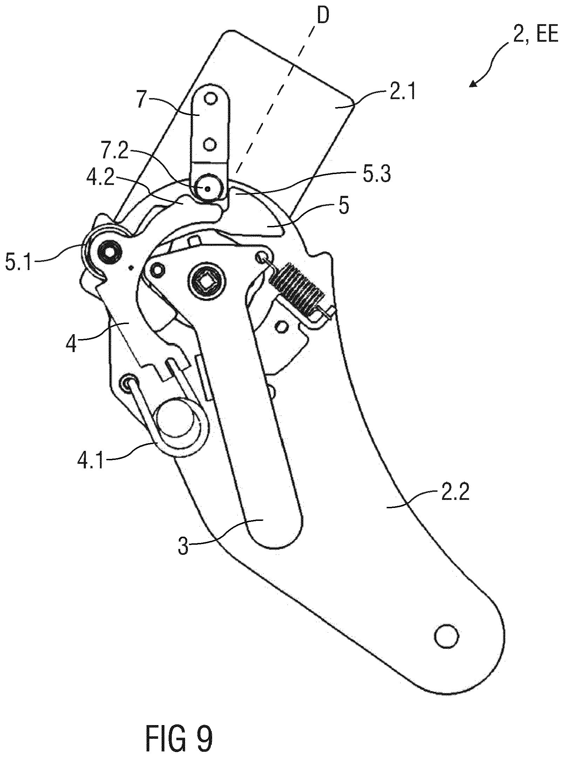

Durch ein an der Easy-Entry-Klinke 5 und/oder die Softsperre 4 angelenktes Federelement 5.1 wird die Easy-Entry-Klinke 5 nach oben gedreht entlang der Pfeile P1 und dient als Anschlag nach vorne (= selbsthemmende Wirkung), wie dies in Figuren 8 bis 10 dargestellt ist. Hierzu umfasst die Easy-Entry-Klinke 5 eine Sperrklinke 5.3. Die Easy-Entry-Position D ist erreicht.

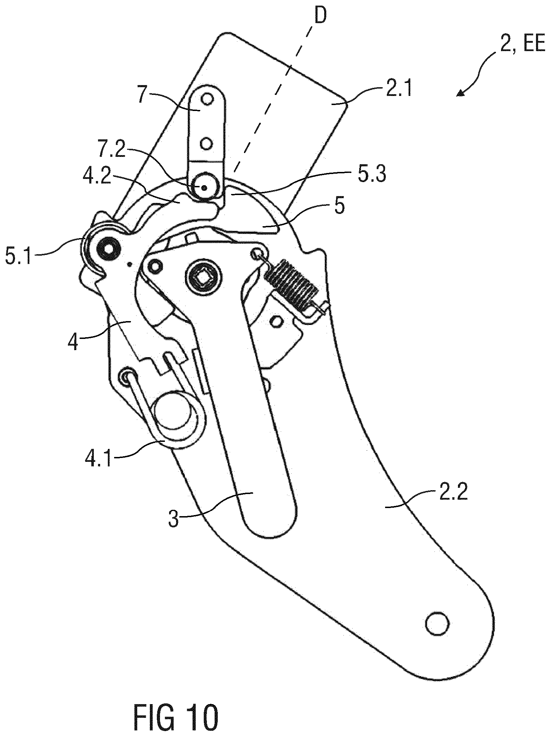

Um die Sitzlehne 1.1 wieder in eine Sitzposition A bis C und somit in den Komfortbereich zurück zu schwenken, muss die Steuerkontur 4.2 und eine daraus resultierende Softlockkraft oder Softsperrkraft, insbesondere eine aus der Kopplung des Endanschlags 7 und der Softsperre 4 resultierende Kraft beim Schwenken nach hinten überwunden werden. Dafür ist keine Betätigung des Entriegelungshebels 3 notwendig (Figur 10).

In einer möglichen Ausführungsform ist die Softlockkraft (auch Softsperrkraft genannt) größer als die Schienenverstellkraft. Dadurch wird sichergestellt, dass der Fahrzeugsitz 1 entlang der Schiene zuerst zurück in eine hintere/hinterste Position fährt, bevor die Sitzlehne 1.1 in die vordere Sitzposition C gestellt wird bzw. diese erreicht. Dies dient zum Schutz der Nutzer, da eine geeignete Fahr- oder Längsposition des Fahrzeugsitzes 1 in der Schiene (verriegelt) sichergestellt wird.

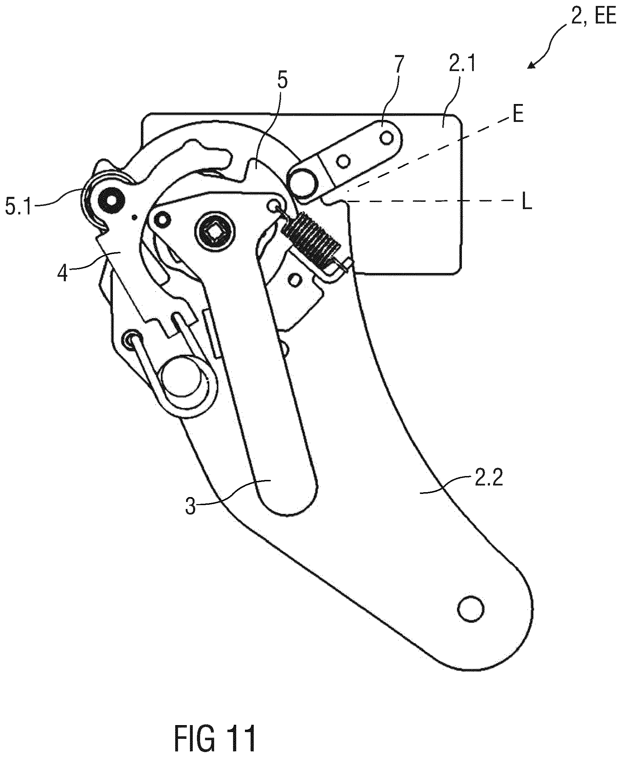

Um die Ladeposition E oder die Ladebodenposition L (auch Klappposition genannt) zu erreichen, muss der Entriegelungshebel 3 erneut betätigt werden. Dadurch wird die Easy-Entry-Klinke 5 abgesenkt, wodurch die Sitzlehne 1.1 weiter nach vorne geklappt werden kann, wie dies in Figur 11 dargestellt ist. Als Anschlag dient nun wieder das Beschlagsunterteil 2.2, insbesondere ein Vorsprung.

Alternativ kann eine Rastfunktion im Beschlag 2 verwendet werden, wodurch höhere Kräfte möglich sind.

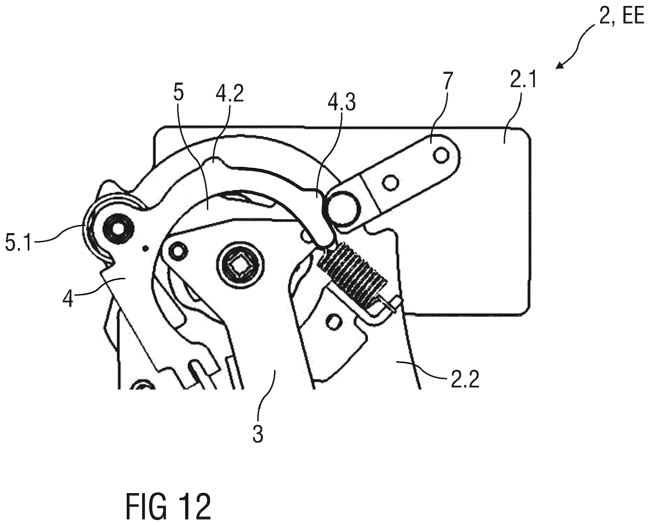

Um die Ladeposition E oder Ladebodenposition L (Klappposition) zu verlassen, kann wahlweise der Entriegelungshebel 3 betätigt werden oder nicht (entweder mit oder ohne Einrastfunktion). Alternativ zur Einrastfunktion im Beschlag 2 kann die Softsperre 4 modifiziert, insbesondere verlängert werden, um eine Haltefunktion in der Ladebodenposition L zu erreichen (gleiches Prinzip wie Easy-Entry-Position), wie in Figur 12 gezeigt. Dabei weist die Softsperre 4 im Bereich der Verlängerung eine Sperrnocke 4.3 in der Außenkontur auf, wodurch der Endanschlag 7 und die Softsperre 4 selbsthemmend zusammenwirken. Alternativ zu Ausformung der Sperrnocke 4.3 an der Außenkontur der Softsperre 4 kann die Sperrnocke 4.3 auch an der Innenkontur der Softsperre 4 ausgebildet sein.

Zusammenfassend wird bei der Easy-Entry-Position D ein Einstieg in eine dahinter befindliche Sitzreihe erleichtert. Dafür wird die Sitzlehne 1.1 aus einer der Sitzpositionen A bis C in eine vordere Position, die Easy-Entry-Position D geschwenkt (beispielsweise ca. 35° nach vorne) und gleichzeitig werden die Längseinstell-Schienen geöffnet, wodurch der Fahrzeugsitz 1 nach vorne bewegt werden kann, um einen maximalen Einstiegbereich zu ermöglichen.

In der sogenannten Klappposition wird das Ladevolumen des Kraftfahrzeugs maximiert. Dazu wird die Sitzlehne 1.1 nach vorne in die Ladebodenposition L geklappt oder geschwenkt, um eine ebene Ladefläche herzustellen.

Unter Freischwenkposition oder -bewegung (free swing) wird insbesondere der Zustand der Sitzlehne 1.1 verstanden, in welchem der Beschlag 2 geöffnet ist und sich die Sitzlehne 1.1, ohne den Entriegelungshebel 3 zu betätigen, schwenken lässt.

### Bezugszeichenliste

- 1: Fahrzeugssitz
- 1.1: Sitzlehne
- 1.2: Sitzkissen
- 2: Beschlag
- 2.1: Beschlagoberteil
- 2.2: Beschlagunterteil
- 2.2.1: Anschlag
- 3: Entriegelungshebel
- 3.1: Anlenkungspunkt
- 3.2: Rückstellfeder
- 4: Softsperre
- 4.1: Rückstellfeder
- 4.2: Steuerkontur
- 4.3: Sperrnocke
- 5: Easy-Entry-Klinke
- 5.1: Federelement
- 5.2: Außenkontur
- 5.3: Sperrklinke
- 7: Endanschlag
- 7.1: Aufnahme
- 7.2: Rollelement

- EE: Easy-Entry-System
- A bis C: Sitzpositionen
- C1: Startposition
- D: Easy-Entry-Position
- E: Ladeposition
- L: Ladebodenposition
- LR: Längsrichtung
- P1: Pfeile
- V: Vorschwenkmechanismus

## Patentansprüche

1. Fahrzeugsitz (1) mit einem Sitzkissen (1.2) und einer neigungseinstellbaren und frei schwenkbaren Sitzlehne (1.1), welche mittels eines Beschlags (2) drehbar am Sitzkissen (1.2) angeordnet ist, und einem Längseinsteller,
wobei der Beschlag (2)
- einen Vorschwenkmechanismus (V) zur Neigungseinstellung und Positionierung der Sitzlehne (1.1) in mindestens eine vordere Position (D, E) aufweist, und
wobei der Vorschwenkmechanismus (V)
- als Einstieghilfe eingerichtet ist zum Freischwenken und Positionierung der Sitzlehne (1.1) über die vordere Position (D, E) hinaus in zumindest eine weitere vordere Position (L), und
- eine Komfortverriegelung zur Positionierung und Verriegelung der Sitzlehne (1.1) in mindestens eine Sitzposition (A bis C), und
- eine Easy-Entry-Klinke (5) zum Positionieren der Sitzlehne (1.1) in die mindestens eine vordere Position (D, E),
- einen sitzlehnenseitigen Endanschlag (7) sowie
- einen boden- oder sitzteilseitigen/-festen Anschlag (2.2.1) umfasst, wobei ein Schwenkbereich der Sitzlehne (1.1) in eine der vorderen Positionen (D, E) mittels der Easy-Entry-Klinke (5) begrenzbar ist, wobei die Easy-Entry-Klinke (5) derart ausgebildet ist, dass diese beim Verstellen der Sitzlehne (1.1) aus einer der Sitzpositionen (A bis C) hinaus in eine der vorderen Positionen (D, E) einen Anschlag nach vorne bildet und in eine Stellung bringbar ist, in welcher ein Sperrhaken oder eine Sperrklinke (5.3) der Easy-Entry-Klinke (5) in Eingriff mit dem sitzlehnenseitigen Endanschlag (7) kommt, und
wobei ein Schwenkbereich der Sitzlehne (1.1) in eine der hinteren Sitzpositionen (A bis C) mittels des Endanschlags (7) begrenzbar ist, wobei der Endanschlag (7) in der hinteren Sitzposition (A) an dem boden- oder sitzteilseitigen/-festen Anschlag (2.2.1) anschlägt und die Einstellung der Sitzlehne (1) nach hinten begrenzt.

2. Fahrzeugsitz (1) nach Anspruch 1, wobei sitzlehnenseitig korrespondierend zum Anschlag der Easy-Entry-Klinke (5) der Endanschlag (7) vorgesehen ist, der mit dem Anschlag der Easy-Entry-Klinke (5) in einer der vorderen Positionen (D, E) der Sitzlehne (1.1) selbsthemmend zusammenwirkt.

3. Fahrzeugsitz (1) nach Anspruch 1 oder 2, wobei die Easy-Entry-Klinke (5) schwenkbar und federbelastet an einem Beschlagunterteil (2.2) angelenkt ist.

4. Fahrzeugsitz (1) nach Anspruch 2 oder 3, wobei beim Aufrichten der Sitzlehne (1.1) aus einer der vorderen Positionen (D, E) hinaus in eine der Sitzpositionen (A bis C) im Komfortbereich hinein der Endanschlag (7) derart in Eingriff mit einer Softsperre (4) steht, dass eine Softsperrkraft größer als eine Längsverstellkraft des Fahrzeugsitzes (1) ist.

5. Fahrzeugsitz (1) nach Anspruch 4, wobei die Softsperre (4) als ein L-Profil ausgebildet ist, das zumindest eine Außenkontur mit zumindest einer Steuernocke (4.2) aufweist, welche mit dem Endanschlag (7) zusammenwirkt.

6. Fahrzeugsitz (1) nach Anspruch 4 oder 5, wobei die Softsperre (4) schwenkbar und federbelastet am Beschlagunterteil (2.2) angelenkt ist.

7. Fahrzeugsitz (1) nach Anspruch 5 oder 6,
wobei der Endanschlag (7) während des Vorschwenkens der Sitzlehne (1.1) in die zumindest eine vordere Position (D, E) an der Außenkontur der Softsperre (4) entlang gleitet, wobei die Softsperrkraft durch die Ausformung der Steuernocke (4.2) und/oder einer Federkraft einer Rückstellfeder (4.1) der Softsperre (4) bestimmt ist.

8. Fahrzeugsitz (1) nach einem der Ansprüche 4 bis 7,
wobei die Softsperre (4) derart verlängert ausgebildet ist, dass in einer weiteren vorderen Position (L) der Sitzlehne (1.1) diese durch ein selbsthemmendes Zusammenwirken von Endanschlag (7) und Softsperre (4) gehalten wird.

9. Fahrzeugsitz (1) nach Anspruch 8,
wobei der Längseinsteller und der Vorschwenkmechanismus (V) derart zusammenwirken, dass der Fahrzeugsitz (1) bei einer vorgeschwenkten Sitzlehne (1.1) in einer der vorderen Positionen (D, E) vor einem Rückschwenken der Sitzlehne (1.1) in eine Sitzposition (A bis C) erst nach hinten verfahrbar ist.

## Claims

1. Vehicle seat (1) with a seat cushion (1.2) and an inclination-adjustable and freely pivotable backrest (1.1) which is arranged on the seat cushion (1.2) such that it is rotatable by means of a fitting (2), and a longitudinal adjuster,
wherein the fitting (2)
- has a forward pivot mechanism (V) for the inclination-adjustment and positioning of the backrest (1.1) into at least one forward position (D, E), and
wherein the forward pivot mechanism (V),
- as an entry aid, is configured to freely pivot and position the backrest (1.1) beyond the forward position (D, E) into at least one further forward position (L), and comprises
- a comfort locking for positioning and locking the backrest (1.1) into/in at least one seat position (A to C), and
- an easy-entry detent (5) for positioning the backrest (1.1) into the at least one forward position (D, E),
- an end stop (7) on the backrest side, and also
- a stop (2.2.1), which is on the floor or seat part side/is fixed to the floor or the seat part, wherein a pivoting range of the backrest (1.1) into one of the forward positions (D, E) is limitable by means of the easy-entry detent (5), wherein the easy-entry detent (5) is designed in such a manner that, during the adjustment of the backrest (1.1) from one of the seat positions (A to C) into one of the forward positions (D, E), said easy-entry detent forms a stop to the front and is bringable into a position in which a locking hook or a locking detent (5.3) of the easy-entry detent (5) comes into engagement with the end stop (7) that is on the backrest side, and
wherein a pivoting range of the backrest (1.1) into one of the rearward seat positions (A to C) is limitable by means of the end stop (7), wherein, in the rearward seat position (A), the end stop (7) strikes against the stop (2.2.1), which is on the floor or seat part side/is fixed to the floor or the seat part, and limits the adjustment of the backrest (1) rearwards.

2. Vehicle seat (1) according to Claim 1, wherein the end stop (7) is provided on the backrest side in a manner corresponding to the stop of the easy-entry detent (5), said end stop interacting in a self-locking manner with the stop of the easy-entry detent (5) in one of the forward positions (D, E) of the backrest (1.1).

3. Vehicle seat (1) according to Claim 1 or 2, wherein the easy-entry detent (5) is coupled to a fitting lower part (2.2) in a pivotable and spring-loaded manner.

4. Vehicle seat (1) according to Claim 2 or 3,
wherein, when the backrest (1.1) is being raised from one of the forward positions (D, E) into one of the seat positions (A to C) within the comfort range, the end stop (7) is in engagement with a softlock (4) in such a manner that a softlock force is greater than a longitudinal adjustment force of the vehicle seat (1).

5. Vehicle seat (1) according to Claim 4, wherein the softlock (4) is designed as an L profile which has at least one outer contour with at least one control cam (4.2) which interacts with the end stop (7) .

6. Vehicle seat (1) according to Claim 4 or 5, wherein the softlock (4) is coupled to the fitting lower part (2.2) in a pivotable and spring-loaded manner.

7. Vehicle seat (1) according to Claim 5 or 6,
wherein, during the pivoting of the backrest (1.1) into the at least one forward position (D, E), the end stop (7) slides along the outer contour of the softlock (4), wherein the softlock force is determined by the moulding of the control cam (4.2) and/or a spring force of a restoring spring (4.1) of the softlock (4).

8. Vehicle seat (1) according to one of Claims 4 to 7,
wherein the softlock (4) is extended in such a manner that, in a further forward position (L) of the backrest (1.1), the latter is held by a self-locking interaction of end stop (7) and softlock (4).

9. Vehicle seat (1) according to Claim 8,
wherein the longitudinal adjuster and the forward pivot mechanism (V) interact in such a manner that, when a backrest (1.1) is pivoted forward in one of the forward positions (D, E), the vehicle seat (1) is firstly movable rearwards before the backrest (1.1) pivots back into a seat position (A to C).

## Revendications

1. Siège de véhicule (1) comprenant un coussin de siège (1.2) et un dossier de siège (1.1) qui est réglable en inclinaison, qui peut pivoter librement et qui est disposé de manière rotative sur le coussin de siège (1.2) au moyen d'une ferrure (2), et un dispositif de réglage longitudinal,
la ferrure (2) comportant
- un mécanisme de pivotement vers l'avant (V) destiné à régler l'inclinaison et à positionner le dossier de siège (1.1) dans au moins une position avant (D, E), et
le mécanisme de pivotement vers l'avant (V)
- étant adapté en tant qu'auxiliaire d'entrée pour faire pivoter librement et pour positionner le dossier de siège (1.1) au-delà de la position avant (D, E) jusque dans au moins une autre position avant (L), et comprenant
- un moyen de verrouillage de confort destiné à positionner et verrouiller le dossier de siège (1.1) jusque dans au moins une position de siège (A à C), et
- un cliquet à entrée facile (5) destiné à positionner le dossier de siège (1.1) dans l'au moins une position avant (D, E),
- une butée d'extrémité (7) située du côté du dossier de siège et
- une butée (2.2.1) située du côté de la partie de siège ou du fond/fixée à celle-ci,
une plage de pivotement du dossier de siège (1.1) jusque dans l'une des positions avant (D, E) pouvant être limitée au moyen du cliquet à entrée facile (5), le cliquet à entrée facile (5) étant conçu de façon à pouvoir former une butée vers l'avant lorsque le dossier de siège (1.1) est déplacé de l'une des positions de siège (A à C) à l'une des positions avant (D, E) et de façon à pouvoir être amené dans une position dans laquelle un crochet de blocage ou un cliquet de blocage (5.3) du cliquet à entrée facile (5) vient en engagement avec la butée d'extrémité (7) située du côté du dossier de siège, et
une plage de pivotement du dossier de siège (1.1) jusque dans l'une des positions de siège arrière (A à C) pouvant être limitée au moyen de la butée d'extrémité (7),
la butée d'extrémité (7) butant, dans la position de siège arrière (A), sur la butée (2.2.1) située du côté de la partie de siège ou du fond/fixée à celui-ci et limitant le réglage du dossier de siège (1) vers l'arrière.

2. Siège de véhicule (1) selon la revendication 1, la butée d'extrémité (7) étant prévue du côté du dossier de siège en correspondance de la butée du cliquet à entrée facile (5) et coopérant de manière autobloquante avec la butée du cliquet à entrée facile (5) dans l'une des positions avant (D, E) du dossier de siège (1.1).

3. Siège de véhicule (1) selon la revendication 1 ou 2, le cliquet à entrée facile (5) étant relié de manière articulée à une partie de ferrure inférieure (2.2) de façon à pouvoir pivoter et sous la contrainte d'un ressort.

4. Siège de véhicule (1) selon la revendication 2 ou 3, lors du redressement du dossier de siège (1.1) au-delà de l'une des positions avant (D, E) jusque dans l'une des positions de siège (A à C) dans la zone de confort, la butée (7) étant en engagement avec un moyen de blocage souple (4) de façon à ce qu'une force de blocage souple soit supérieure à une force de réglage longitudinal du siège de véhicule (1).

5. Siège de véhicule (1) selon la revendication 4, le moyen de blocage souple (4) étant réalisé sous la forme d'un profilé en L qui présente au moins un contour extérieur pourvu d'au moins une came de commande (4.2) qui coopère avec la butée d'extrémité (7).

6. Siège de véhicule (1) selon la revendication 4 ou 5, le moyen de blocage souple (4) étant relié de manière articulée à une partie de ferrure inférieure (2.2) de façon à pouvoir pivoter et sous la contrainte d'un ressort.

7. Siège de véhicule (1) selon la revendication 5 ou 6,
la butée d'extrémité (7) coulissant le long du contour extérieur du moyen de blocage souple (4) pendant le pivotement vers l'avant du dossier de siège (1.1) jusque dans l'au moins une position avant (D, E), la force de blocage souple étant déterminée par la forme de la came de commande (4.2) et/ou une force élastique d'un ressort de rappel (4.1) du moyen de blocage souple (4).

8. Siège de véhicule (1) selon l'une des revendications 4 à 7,
le moyen de blocage souple (4) étant conçu pour être allongé de telle sorte que dans une autre position avant (L) du dossier de siège (1.1), celui-ci soit maintenu par coopération autobloquante de la butée d'extrémité (7) et du moyen de blocage souple (4).

9. Siège de véhicule (1) selon la revendication 8,
le dispositif de réglage longitudinal et le mécanisme de pivotement vers l'avant (V) coopérant de telle manière que le siège de véhicule (1) ne peut être déplacé que vers l'arrière lorsqu'un dossier de siège (1.1) a pivoté vers l'avant jusque dans l'une des positions avant (D, E) avant de faire pivoter le dossier de siège (1.1) vers une position de siège (A à C).
